# EUROPEAN PATENT APPLICATION

(11) **EP 4 509 796 A1**
(43) Date of publication of application: **19.02.2025**
(21) Application number: 23915232.5
(22) Date of filing: 09.01.2023
(51) Int. Cl.: G01B 7/16

(54) **STRAIN SENSOR AND MANUFACTURING METHOD THEREFOR**

(71) Applicant: Shenzhen Shokz Co., Ltd., Shenzhen, Guangdong 518108 (CN)
(72) Inventor: YUAN, Yongshuai, Shenzhen, Guangdong 518108 (CN); DENG, Wenjun, Shenzhen, Guangdong 518108 (CN); HUANG, Yujia, Shenzhen, Guangdong 518108 (CN); ZHOU, Wenbing, Shenzhen, Guangdong 518108 (CN); LIAO, Fengyun, Shenzhen, Guangdong 518108 (CN); QI, Xin, Shenzhen, Guangdong 518108 (CN)
(74) Representative: Wang, Bo
(86) International application number: PCT/CN2023/071186
(87) International publication number: WO 2024/148448

(57) **Abstract**

A strain sensor (200) comprising a substrate (210) is provided. The substrate (210) is provided with a groove structure (211). An electrically conductive film (220) is affixed to a surface of the substrate (210), and a crack (221) is provided at a position of the electrically conductive film (220) corresponding to the groove structure (211). The strain sensor has relatively high sensitivity.

## Description

### TECHNICAL FIELD

The present disclosure relates to the field of sensing devices, and in particular, to strain sensors and methods for preparing the same.

### BACKGROUND

A strain sensor, as a sensor that measures deformation of an object subjected to a force, is widely used in various electronic devices. Current strain sensors are mostly resistive strain sensors, which convert mechanical strain into an electrical signal through a resistive strain gauge. The enhancement of the sensitivity of the resistive strain sensors is mainly achieved by improving a resistive material and circuit optimization. However, improving the resistive material and circuit optimization involves a long research and development (R&D) cycle and high R&D costs. Moreover, a crack may be set up in the resistive material by mechanical deformation in the existing resistive strain sensors to improve the sensitivity of the resistive strain sensors. However, a location of the crack generated by the mechanical deformation is difficult to control, resulting in poor consistency in the performance of a prepared sample, which is not favorable for industrial applications.

Therefore it is desirable to provide a strain sensor that has a simple structure, is cost-effective, and possesses a high sensitivity.

### SUMMARY

One of the embodiments of the present disclosure provides a strain sensor comprising a substrate. The substrate is provided with a groove structure; an electrically conductive film is affixed to a surface of the substrate, and a crack is provided at a position of the electrically conductive film corresponding to the groove structure.

In some embodiments, the groove structure penetrates the substrate.

In some embodiments, the groove structure does not penetrate the substrate and the electrically conductive film is disposed on a side of the substrate where an opening of the groove structure is located.

In some embodiments, a dimension of the groove structure in a second direction along a length of the substrate is in a range of 1 µm to 50 µm.

In some embodiments, the groove structure does not penetrate the substrate and the electrically conductive film is disposed on a side of the substrate opposite to a side where an opening of the groove structure is located.

In some embodiments, a dimension of the groove structure in a second direction along a length of the substrate is in a range of 10 µm to 100 µm.

In some embodiments, the groove structure extends in a first direction along a width of the substrate, and a dimension of the groove structure in the first direction is greater than a dimension of the electrically conductive film in the first direction at a position of the groove structure.

In some embodiments, the groove structure extends in a first direction along a width of the substrate, and a ratio of a dimension of the groove structure to a dimension of the substrate in the first direction is in a range of 2/3 to 9/10.

In some embodiments, the groove structure extends in a first direction along a width of the substrate, and an aperture-like structure is provided at each of two ends of the groove structure along an extension direction of the groove structure.

In some embodiments, the groove structure includes a first groove, a second groove, and a third groove that are arranged sequentially in a second direction along a length of the substrate, and a first spacing between the first groove and the second groove is equal to a second spacing between the second groove and the third groove.

In some embodiments, the groove structure includes a first groove, a second groove, and a third groove that are arranged sequentially in a second direction along a length of the substrate, and a first spacing between the first groove and the second groove is not equal to a second spacing between the second groove and the third groove.

In some embodiments, a resistivity of the substrate is greater than 1 x 10⁷ Ω·m, and the electrically conductive film exhibits different resistances in response to changes in external stress.

In some embodiments, the electrically conductive film is made of a conductive carbon paste.

In some embodiments, a resistivity of the substrate is greater than 1 x 10⁷ Ω·m, and the electrically conductive film exhibits a conductive state or a disconnected state under an action of an external stress.

In some embodiments, the electrically conductive film is made of a conductive silver paste.

One of the embodiments of the present disclosure provides a method for preparing a strain sensor. The method includes: etching a groove structure on a substrate, the substrate being non-conductive; coating a conductive paste on the substrate and curing the conductive paste on the substrate to form an electrically conductive film; and obtaining the strain sensor by bending the substrate coated with the electrically conductive film to form a crack.

One of the embodiments of the present disclosure provides a pressure sensor comprising a strain sensor. The strain sensor includes a substrate, the substrate being provided with a groove structure; an electrically conductive film affixed to the surface of the substrate, the electrically conductive film being provided with a crack at a position corresponding to the groove structure; and a support member for supporting the groove structure and the crack.

In some embodiments, the support member is provided on the electrically conductive film or on a side of the substrate where the electrically conductive film is located.

In some embodiments, the pressure sensor is arranged in an earphone, the earphone comprising: a loudspeaker configured to generate a sound signal, and a housing configured to carry the loudspeaker and the pressure sensor, wherein the pressure sensor is configured to switch the pressure sensor from a conductive state to a disconnected state in response to a pressure applied by a user and generate a corresponding electrical signal.

### BRIEF DESCRIPTION OF THE DRAWINGS

The present disclosure will be further illustrated by way of exemplary embodiments, which will be described in detail with reference to the accompanying drawings. These embodiments are not limiting, and in these embodiments, the same numbering denotes the same structure, wherein:
FIG. 1 is a block diagram of an exemplary strain sensor according to some embodiments of the present disclosure;
FIG. 2A is a diagram of an exemplary structure of a strain sensor according to some embodiments of the present disclosure;
FIG. 2B is an A-A cross-sectional view of the strain sensor shown in FIG. 2A according to some embodiments of the present disclosure.
FIG. 2C is a diagram of an exemplary structure of a strain sensor according to some other embodiments of the present disclosure;
FIG. 2D is a B-B cross-sectional view of the strain sensor shown in FIG. 2C according to some embodiments of the present disclosure;
FIG. 3 is a diagram of an exemplary structure of a strain sensor according to some other embodiments of the present disclosure;
FIG. 4 is a diagram of an exemplary structure of a strain sensor according to some other embodiments of the present disclosure;
FIG. 5 is a diagram of an exemplary structure of a strain sensor according to some other embodiments of the present disclosure;
FIG. 6 is a flowchart of an exemplary process for preparing a strain sensor according to some embodiments of the present disclosure; and
FIG. 7 is a diagram of an exemplary structure of a pressure sensor according to some embodiments of the present disclosure.

### DETAILED DESCRIPTION

In order to provide a clearer understanding of the technical solutions of the embodiments described in the present disclosure, a brief introduction to the drawings required in the description of the embodiments is given below. It is evident that the drawings described below are merely some examples or embodiments of the present disclosure, and for those skilled in the art, the present disclosure may be applied to other similar situations without exercising creative labor. Unless otherwise indicated or stated in the context, the same reference numerals in the drawings represent the same structures or operations.

As indicated in the present disclosure and the claims, the singular forms "a," "an," and "the" may be intended to include the plural forms as well, unless the context clearly indicates otherwise. In general, the terms "comprise," "comprises," and/or "comprising," "include," "includes," and/or "including," when used in this disclosure, specify the presence of stated features, integers, steps, operations, elements, and/or components, but do not preclude the presence or addition of one or more other features, integers, steps, operations, elements, components, and/or groups thereof.

In the description of the present disclosure, it is to be understood that the terms "first," "second," "third," "fourth," etc., are used for descriptive purposes only, and are not to be understood as indicating or implying relative importance or implicitly specifying the number of technical features indicated. Thereby, features with descriptive terms "first," "second," "third," "fourth," etc., may expressly or implicitly include at least one such feature. In the description of the present disclosure, "plurality" and "multiple" means at least two, e.g., two, three, or the like, unless otherwise expressly and specifically limited.

In the present disclosure, unless otherwise expressly specified or limited, the terms "connection," "connected," "fixing," "fixed," or the like shall be broadly construed. For example, the term "connection" may refer to a fixed connection, a removable connection, or a one-piece connection; a mechanical connection, an electrical connection, a direct connection, an indirect connection through an intermediate medium, a connection within two elements, or an interaction between two elements, unless expressly limited otherwise. To a person of ordinary skill in the art, the specific meanings of the above terms in the present disclosure may be understood on a case-by-case basis.

Embodiments of the present disclosure provide a strain sensor comprising a substrate and an electrically conductive film. The substrate is provided with a groove structure, and the electrically conductive film is affixed to a surface of the substrate. A crack is provided at a position of the electrically conductive film corresponding to the groove structure.

In some embodiments, a resistance value of the electrically conductive film may change in response to a deformation of the strain sensor. At this point, by providing a crack in the electrically conductive film, not only the resistance of the electrically conductive film can be changed when the sensor is deformed by the external stress, but a contact area between conductive substances within the electrically conductive film can also change accordingly, thereby leading to a greater change in the resistance value under a same amount of deformation, enhancing the sensitivity of the strain sensor without the need for R&D of a new material and/or circuit optimization, and significantly reducing costs. Additionally, by providing the groove structure on the substrate, the stress can be highly concentrated at a location wherein the groove structure is provided, causing the crack to preferentially form in the groove structure. By rationally determining the position of the groove structure, the crack in the electrically conductive film can be generated in a controlled and orderly manner, thereby improving the consistency of the crack in the fabricated resistive strain sensor, which is beneficial for industrial applications. Furthermore, by altering a width and a count of the groove structures and the conductivity of the electrically conductive film, the sensitivity of the resistive strain sensor can be adjusted flexibly to suit scenarios with different sensitivity requirements.

In some embodiments, the resistance value of the electrically conductive film may not change in response to the bending of the strain sensor, or the conductivity of the electrically conductive film may be minimally affected by the bending. In this case, by providing the crack in the electrically conductive film, the crack can be allowed to close or fully open when the strain sensor deforms under external stress, thus enabling the circuit incorporating the strain sensor to conduct or cut off, thereby achieving a switch function. Additionally, a support member may be provided to suspend the groove structure and the crack, allowing the strain sensor to facilitate crack closure and opening under external stress, thereby realizing pressure sensing capabilities.

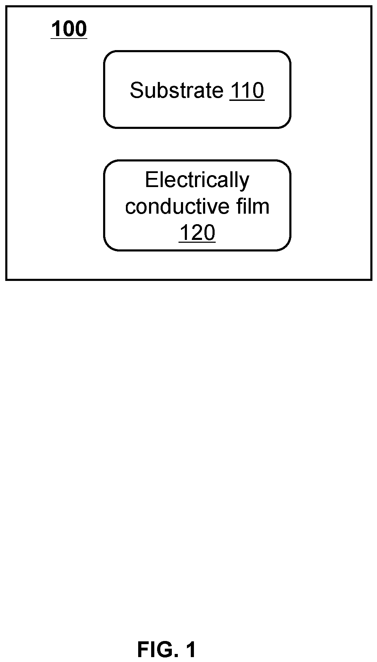

FIG. 1 is a block diagram of an exemplary strain sensor according to some embodiments of the present disclosure.

As shown in FIG. 1, a strain sensor 100 includes a substrate 110 and an electrically conductive film 120.

The substrate 110 may be configured to carry the electrically conductive film 120. The substrate 110 may generate an elastic deformation in response to external stress. The substrate 110 is provided with a groove structure. In some embodiments, the groove structure 211 may be a recess that is rectangular, circular, or other irregularly shaped in cross-section. The shape of the groove structure 211 is configured to produce a stress concentration effect, and its shape may be varied for ease of processing. The present disclosure does not limit the shape.

In some embodiments, the substrate 110 may be a non-conductive material that has a certain degree of mechanical strength and generates an elastic deformation under external stress. For example, the substrate 110 may be materials such as polyvinyl alcohol, polyimide, polydimethylsiloxane, or the like. In some embodiments, the substrate 110 may be made of a conductive material. For example, the substrate 110 may be metal, graphene, or the like. When the substrate 110 is made by an electrically conductive material, an insulating layer may be provided between the substrate 110 and the electrically conductive film 120 for isolating electrical conduction between the substrate 110 and the electrically conductive film 120. Exemplary materials of the insulating layer may include polyethylene, rubber, or the like. In some embodiments, a shape of the substrate 110 may include a regular shape such as a triangle, a rectangle, a circle, an oval, or the like, or any other irregular shape. A width, a thickness, a length, etc., of the substrate 110 may be set according to specific needs.

The electrically conductive film 120 may be adhered to a surface of the substrate 110 or an insulating layer (if any) on the substrate 110. The crack is provided at the position of the electrically conductive film 120 corresponding to the groove structure. The opening (including full opening and partial opening) or closing of the crack may affect the resistance in the circuit in which the strain sensor 100 is located. For example, when the crack is closed, two sides of the crack are conductive (or referred to as the strain sensor 100 being in a conductive state), at which point the resistance of the strain sensor 100 is determined only by a material of the electrically conductive film 120 (e.g., the resistivity of the material, a shape of the electrically conductive film, etc.). When the crack gradually opens, a contact area of the electrically conductive film 120 at the crack becomes smaller, and a degree of conduction thereof deteriorates. That is, the greater the degree of opening of the crack, the greater the resistance of the strain sensor 100; conversely, the smaller the degree of opening of the crack, the lower the resistance of the strain sensor 100. When the crack is fully open (i.e., the two portions of the electrically conductive film formed by the split of the crack are disconnected from each other), the two sides of the crack are not conductive, and the strain sensor 100 is in a disconnected state at this time.

It should be noted that in the present disclosure, when the strain sensor 100 is in its natural state, the crack may be in an open state (e.g., fully open and partially open) or a closed state, and the state of the crack is not limited herein. If the crack is in the open state when the strain sensor 100 is in the natural state, the crack may be gradually closed during bending of the strain sensor 100; if the crack is in the closed state when the strain sensor 100 is in the natural state, the crack may gradually open during the bending of the strain sensor 100.

In some embodiments, the electrically conductive film 120 may be formed by curing a conductive paste. In some embodiments, the conductive paste may be formed from a mixture of conductive particles and a resin substrate. Exemplary conductive particles may include carbon black, carbon nanotubes, graphene, silver powder, copper powder, or the like. Exemplary resin substrates may include epoxy resins, polyvinyl chloride (PVC), polyimide resins, phenolic resins, or the like. In some embodiments, the terms conductive paste and electrically conductive film may be used interchangeably in the present disclosure. For example, a conductive carbon paste may also refer to an electrically conductive film formed by curing the conductive carbon paste.

In some embodiments, the shape of the electrically conductive film 120 may or may not match the shape of the substrate 110. For example, when the shape of the substrate 110 is circular, the shape of the electrically conductive film 120 may be oval. As another example, when the shape of the substrate 110 is rectangular, the shape of the electrically conductive film 120 may also be rectangular. For ease of description, the present disclosure takes both the substrate 110 and the electrically conductive film 120 being rectangular as an example, which does not limit the scope of the present disclosure.

The electrically conductive film 120 may deform accordingly with the deformation of the substrate 110. In some embodiments, the electrically conductive film 120 may be formed by curing a conductive paste with relatively high resistivity, then the resistance of the electrically conductive film 120 may change in response to a deformation (e.g., bending) of the strain sensor 100. At this point, the strain sensor 100 may also be referred to as a resistive strain sensor. The resistive strain sensor may generate an electrical signal in response to the deformation of the strain sensor 100. Specifically, when the strain sensor 100 deforms (e.g., bends) due to an external force, the surface of the substrate 110 may be stretched or compressed, which in turn causes the electrically conductive film 120 set on the surface thereof to deform, thereby causing a change (e.g., an increase or a decrease) in the resistance value of the electrically conductive film 120 and generating an electrical signal. Exemplary electrical signals may include a resistance signal, a current signal, a voltage signal, or the like.

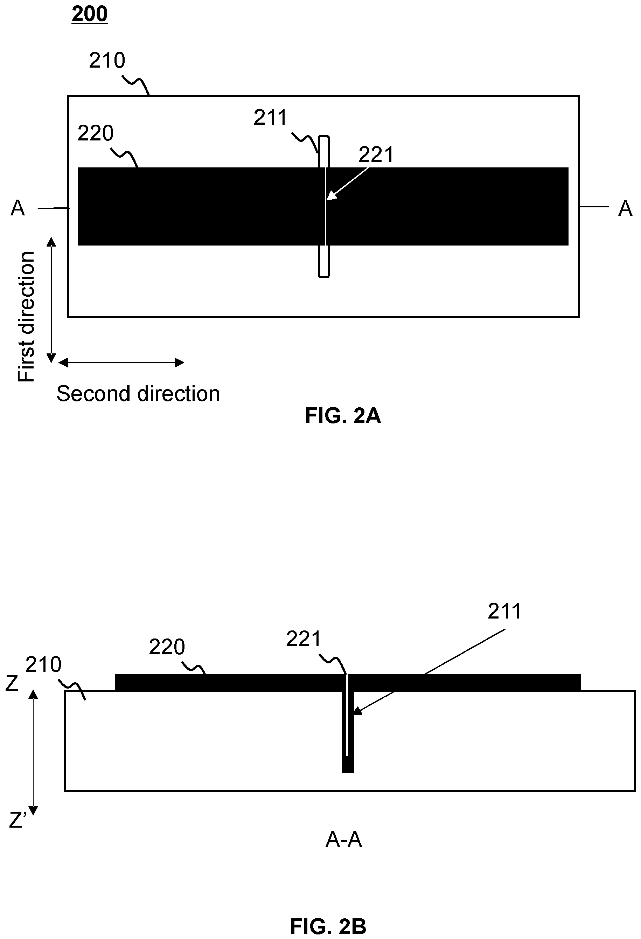

In some embodiments, the electrically conductive film 120 may be formed by curing a conductive paste with low resistivity, and the resistance of the electrically conductive film 120 does not essentially change with the bending of the strain sensor 100. At this point, when the strain sensor 100 deforms due to an external force, the crack in the electrically conductive film 120 may open or close under an action of an external stress, so as to make the circuit in which the strain sensor 100 is located be in a closed-circuit state or an open-circuit state. Further descriptions of the strain sensor may be found elsewhere in the present disclosure, e.g., FIG. 2A- FIG. 7 and their descriptions, and will not be repeated here.

In some embodiments, the strain sensor 100 may also include a processor (not shown in the drawings). The processor may be configured to process the electrical signal. For example, when the strain sensor 100 is set on a target object, the processor may determine a degree of bending of the strain sensor 100 (or the target object) based on a change in the resistance value of the strain sensor 100. As another example, the processor may determine whether a user is applying pressure (e.g., whether the user is tapping or long-pressing) based on a difference between the electrical signals generated by the strain sensor 100 in the conductive state and in the disconnected state, which may allow for the execution of a corresponding operation.

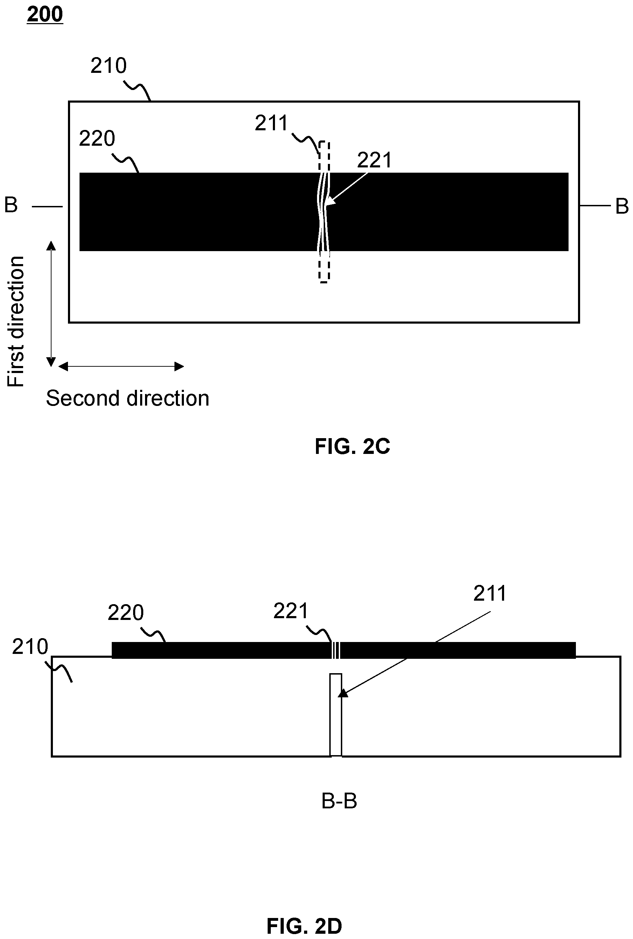

FIG. 2A is a diagram of an exemplary structure of a strain sensor according to some embodiments of the present disclosure. FIG. 2B is an A-A cross-sectional view of the strain sensor shown in FIG. 2A according to some embodiments of the present disclosure. FIG. 2C is a diagram of an exemplary structure of a strain sensor according to some other embodiments of the present disclosure. FIG. 2D is a B-B cross-sectional view of the strain sensor shown in FIG. 2C according to some embodiments of the present disclosure.

As shown in FIG. 2A or FIG. 2C, a strain sensor 200 may include a substrate 210 and an electrically conductive film 220. The substrate 210 may be configured to carry the electrically conductive film 220. The substrate 210 is provided with a groove structure 211. The electrically conductive film 220 is adhered to a surface of the substrate 210, and a crack 221 is provided in the electrically conductive film 220 at a position corresponding to the groove structure 211.

The setting of the groove structure 211 may enable orderly and controllable crack 221 to be generated during the preparation of the strain sensor 200. That is, the crack 221 may be generated in a region corresponding to the groove structure 211. It may be understood that in a process of preparing the strain sensor 200, after a conductive paste is coated on the substrate 210 and cured to form the electrically conductive film 220, when the substrate 210 coated with the electrically conductive film 220 bends, due to a stress concentration effect, a region where the deformation of the substrate 210 occurs is prioritized in a portion of the substrate 210 where a shape of the substrate 210 changes sharply (e.g., the position of the groove structure 211 of the substrate 210). Thus, when the substrate 210 coated with the electrically conductive film 220 bends due to an external force, the groove structure 211 may concentrate the stress on the substrate 210 mainly at the position of the groove structure 211, so that a crack 221 can form at the position of the electrically conductive film 220 corresponding to the groove structure 211. Thus, the groove structure 211 may be pre-set on the substrate 210 according to a rule, and based on the stress concentration effect, the crack 221 may be formed at the position corresponding to the groove structure 211, thereby realizing controllable generation of the crack in accordance with the rule. Specifically, as shown in FIG. 2A or FIG. 2C, the groove structure 211 may extend in a first direction of the substrate 210 (e.g., a width direction of the substrate 210).

In some embodiments, the groove structure 211 may penetrate the substrate 210 in a direction perpendicular to a paper surface. Setting the groove structure 211 to penetrate the substrate 210 is advantageous for the stress on the strain sensor 200 to be concentrated at the crack 221 and for the substrate 210 to be easily machined. In some embodiments, the groove structure 211 may also not penetrate the substrate 210. For example, as shown in FIG. 2A or FIG. 2B, when the groove structure 211 does not penetrate the substrate 210, the electrically conductive film 220 may be disposed on a side of the substrate 210 on which an opening of the groove structure 211 is located. As another example, the electrically conductive film 220 may be disposed on a side opposite to the side on which the opening of the groove structure 211 on the substrate 210 is located, as shown in FIG. 2C or FIG. 2D. By setting the groove structure 211 not penetrate the substrate 210 and the electrically conductive film 220 on the side where the opening of the groove structure 211 is located (i.e., corresponding to the structure shown in FIG. 2B), it is possible to realize further protection of a circuit structure (e.g., the electrically conductive film 220) of the strain sensor 200 to prevent the electrically conductive film 220 from being exposed, so that impurities (e.g., the conductive impurities) do not enter and affect circuit stability.

In some embodiments, when the groove structure 211 is configured not to penetrate the substrate 210 and the electrically conductive film 220 is provided on the side where the opening of the groove structure 211 is located (i.e., corresponding to the structures shown in FIG. 2A and FIG. 2B), in the process of preparing the corresponding strain sensor 200, after a conductive paste is coated on the substrate 210, the conductive paste, due to its fluidity, fills into the groove structure 211. In this case, when the conductive paste is cured to form the electrically conductive film 220, a main crack may be generated in the electrically conductive film 220 at a location corresponding to the groove structure 211 in a process of bending to generate the crack 221. The main crack may extend into the groove structure 211 (shown in FIG. 2B) along a thickness direction (i.e., the ZZ' direction in FIG. 2B) of the substrate 210. At this time, a depth of the main crack along the thickness direction of the substrate 210 may be greater than or substantially equal to a depth of the groove structure 211.

In some embodiments, when the strain sensor 200 having the structure as shown in FIGs. 2A and 2B is in a natural state, cracked surfaces (i.e., side surfaces of two portions of the electrically conductive film on the two sides of the crack) of the crack 221 may be partially in contact with each other (i.e., two portions of the electrically conductive film 220 on the two sides of the crack 221 have a contact surface between the two sides of the crack 221). When the strain sensor 200 is bent and arched in the Z direction by external stress, the cracked surfaces gradually break away from the contact, and the resistance value of the strain sensor 200 increases; when the strain sensor 200 is bent and arched in the Z' direction by external stress, the cracked surfaces gradually come into close contact and the resistance value of the strain sensor 200 decreases. Different external stresses may produce different contact areas between the two portions of the electrically conductive film 220 on the two sides of the crack 221, and different contact areas between two portions of the electrically conductive films 220 on the two sides of the crack 221 may correspond to different resistance values of the strain sensor 200, thereby outputting different electrical signals.

It may be understood that when the strain sensor 200 has the structure as shown in FIGs. 2A and 2B, a dimension (i.e., a width) of the groove structure 211 in a second direction of the substrate 210 may affect the formation of the crack 221 and/or the performance of the strain sensor 200. A width of the groove structure 211 may not be too large or too small. If the width of the groove structure 211 is too small, the conductive paste may not be able to be filled into the groove structure 211 during the preparation of the strain sensor 200, thereby reducing the depth of the main crack, reducing the crack surface contact area of the main crack, and affecting the performance of the strain sensor 200. If the width of the groove structure 211 is too large, the conductive paste filled in the groove structure 211 is prone to crumble after curing during the preparation or use of the strain sensor 200, thereby causing the strain sensor 200 to be in the disconnected state and unable to be used normally. Thus, in some embodiments, in order to make the crack 221 (e.g., the main crack) fine and deep so that the cracked surfaces are easily closed or contacted under bending, the width of the groove structure 211 may be in a range of 1 µm-50 µm.

In some embodiments, the groove structure 211 is configured not to penetrate the substrate 210 and the electrically conductive film 220 is provided on a side opposite to the side where the opening of the groove structure 211 is located (i.e., corresponding to the structure shown in FIG. 2C and FIG. 2D). In this case, during the process of preparing the corresponding strain sensor 200, after the conductive paste is coated on the substrate 210 and cured to form the electrically conductive film 220, multiple cracks 221 may be generated in the electrically conductive film 220 at the position corresponding to the groove structure 211 in the process of bending. At this point, the depth of the cracks 221 along the thickness direction of the substrate 210 may be equal to or substantially equal to a thickness of the electrically conductive film 220.

It may be understood that when the strain sensor 200 has the structure shown in FIG. 2C and FIG. 2D, the width of the groove structure 211 may affect the formation of the crack 221. The width of the groove structure 211 may not be too large or too small. If the width of the groove structure 211 is too small, the stress concentration effect at the groove structure 211 becomes worse when the substrate 210 is bent by an external force during the process of preparing the strain sensor 200, which may result in a failure to produce the crack 221. If the width of the groove structure 211 is too large, a deformation of an unpenetrated portion of the substrate 210 during bending may cause the electrically conductive film 220 to fragment or flake due to excessive deformation, thereby affecting the performance of the strain sensor 200. In addition, a mechanical strength of the substrate 210 and the electrically conductive film 220 is adversely affected if the width of the groove structure 211 is too large, and the substrate 210 may be irreversibly fractured when bent by an external force. Thus, according to some embodiments of the present disclosure, in order to allow for the controlled generation of cracks 221 (e.g., to generate multiple fine cracks that penetrate the substrate 210) and not to affect the support properties of the substrate 210, the dimension of the groove structure 211 along a second direction (e.g., a length direction of the substrate 210) may be in a range of 10 µm to 100 µm.

In some embodiments, a ratio of a dimension of the groove structure 211 in the first direction to a dimension of the substrate 210 in the first direction affects the performance of the strain sensor. For example, the greater the ratio of the dimension of the groove structure 211 in the first direction to the dimension of the substrate 210 in the first direction is, the worse the mechanical strength of the substrate 210 at the location of the groove structure 211 may be, thus the strain sensor is more prone to bend, thereby responding more sensitively. Accordingly, in some embodiments, the ratio of the dimension of the groove structure 211 in the first direction to the dimension of the substrate 210 in the first direction may be in a range of 2/3 to 9/10.

In some embodiments, the resistivity of the substrate 210 may be greater than 1 x 10⁷ Ω·m (e.g., the substrate 210 may be made from an insulating material or the substrate 210 may be a conductor with an insulating material wrapped around an outer layer thereof) to avoid electrical conduction between the substrate 210 and the electrically conductive film 220. The crack 221 in the electrically conductive film 220 may exhibit different degrees of opening with changes in the external stress, resulting in different resistances. For example, the electrically conductive film 220 may be a conductive carbon paste. At this point, the strain sensor 200 may sense the magnitude of the external stress and generate a corresponding electrical signal. For example, when the strain sensor 200 is under no external stress, the electrically conductive film 220 may be in a natural state, at which time the crack 221 may be in the closed state, the two portions of the electrically conductive film 220 on the two sides of the crack 221 are in the best contact, and the resistance of the electrically conductive film 220 may have a minimum value. When the strain sensor 200 is subjected to external stress, the substrate 210 may deform and drive the electrically conductive film 220 (e.g., at the position where the crack 221 is located) to deform, thereby changing the contact area between the two portions of the electrically conductive film 220 on the two sides of the crack 221. Different external stresses may produce different contact areas between the two portions of the electrically conductive film 220 on the two sides of the crack 221, and the different contact areas between the two portions of the electrically conductive film 220 on the two sides of the crack 221 may correspond to different degree of opening of the crack 221, thereby causing the strain sensor 200 to produce different changes in resistance and output different electrical signals. The strain sensor 200 may realize the sensing of the external stress (or deformation) by determining the magnitude (or the degree of deformation) of the external stress based on the electrical signal (e.g., a resistance signal) it generates. Exemplarily, when the strain sensor 200 is applied to a wearable device such as an earphone, the strain sensor 200 (or the substrate 210) may be shaped in a form of a sheet and provided in a rear-hanging assembly between two loudspeakers of the earphone. The strain sensor 200 may generate an electrical signal in response to a change in a degree of bending of the rear-hanging assembly to determine the degree of bending of the rear-hanging assembly, thereby determining whether the earphone is in a wearing state. Further, one or more components of the earphone (e.g., a battery, a Bluetooth module) may be controlled to operate accordingly based on the wearing state of the earphone. As another example, the strain sensor 200 may be affixed to a touch area of a product. When the touch area is touched by a user, the strain sensor 200 may generate an electrical signal in response to the magnitude of a force exerted by the user to determine a touch operation of the user. In some embodiments, the strain sensor 200 may determine the magnitude of external stress based on the electrical signal output from the strain sensor 200 through a predetermined table of electrical signal-stress value relationships. In some embodiments, the table of electrical signal-stress value relationships may be determined experimentally. In the process of sensing the external stress, the presence of the crack 221 may cause the electrically conductive film 220 to produce a greater change in resistance value for the same amount of deformation, to achieve an increased sensitivity of the strain sensor 200.

In some embodiments, the resistivity of the substrate 210 is greater than 1 x 10⁷ Ω·m (e.g., the substrate 210 may be made from an insulating material or the substrate 210 may be a conductor with an insulating material wrapped around the outer layer) to avoid electrical conduction between the substrate 210 and the electrically conductive film 220. The electrically conductive film 220 may be made of a material having a very low resistivity, and its resistance value may be substantially invariant to changes in external stress. For example, the electrically conductive film 220 may be a conductive silver paste. In this case, the electrically conductive film may have a conductive state or a disconnected state under external stress. The strain sensor 200 may act as a switching device. For example, when the strain sensor 200 is not subjected to external stress, the electrically conductive film 220 may be in a natural state. At this time, the two portions of the electrically conductive film 220 on the two sides of the crack 221 are in contact with each other and the crack 221 is in a closed state (which may also be referred to as the electrically conductive film 220 being in the conductive state). Correspondingly, the circuit in which the strain sensor 200 is located is in a conductive state. When the external stress is applied to the strain sensor 200, the substrate 210 may deform and drive the electrically conductive film 220 (e.g., at the position where the crack 221 is located) to deform, thereby making the crack 221 in the open state (which may also be referred to as the electrically conductive film 220 being in the disconnected state). Correspondingly, the circuit in which the strain sensor 200 is located is in the open-circuit state. As a result, an effect of a switching device may be realized by causing the circuit in which the strain sensor 200 is located to be in the open-circuit state or the closed-circuit state by applying or not applying external stress. By using the conductive silver paste as the electrically conductive film 220, the opening and closing of the electrically conductive film can be determined, avoiding issues such as resistance value creep and noise generated during resistance measurement.

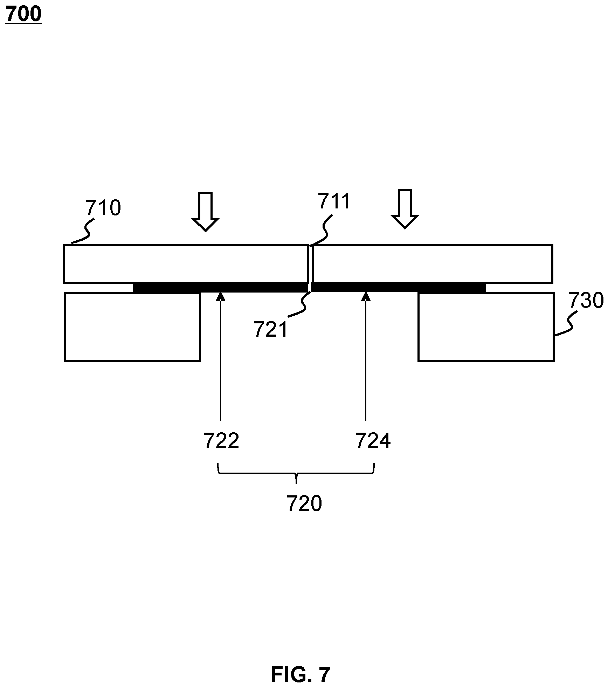

Further, a pressure sensor may be realized by providing a support member that causes the groove structure 211 and the crack 221 to be arranged in suspension and causes the strain sensor to make the crack open and close under the action of the external stress. For a description of the pressure sensor, see FIG. 7 of the present disclosure and the description thereof, which will not be repeated herein.

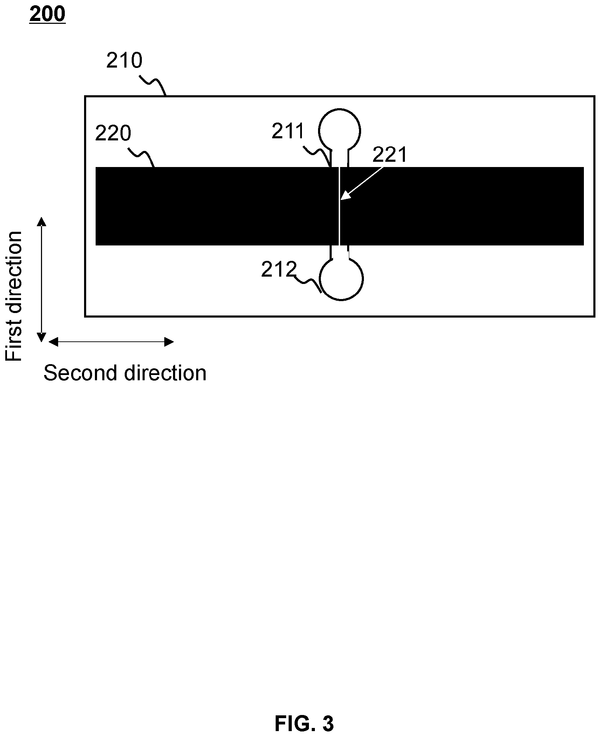

FIG. 3 is a diagram of an exemplary structure of a strain sensor according to some other embodiments of the present disclosure.

In some embodiments, as shown in FIG. 3, the groove structure 211 extends in a first direction along a width of the substrate 210, and an aperture-like structure 212 is provided at each of two ends of the groove structure 211 along an extension direction of the groove structure 211. Exemplary aperture-like structures 212 may include a round aperture, an oval aperture, a square aperture, or the like. In some embodiments, an aperture diameter of the aperture-like structure 212 may be in a range of 1 µm to 100 µm. In some embodiments, the aperture diameter of the aperture-like structure 212 may be larger than the width of the groove structure 211 (i.e., the dimension of the groove structure 211 along the second direction). The setting of the aperture-like structure 212 can avoid stress concentration at the two ends of the groove structure 211 in the first direction, thereby avoiding the groove structure 211 from continuing to expand along the first direction to cause the substrate 210 to fracture at a position of the groove structure 211, and improving the mechanical strength of the strain sensor.

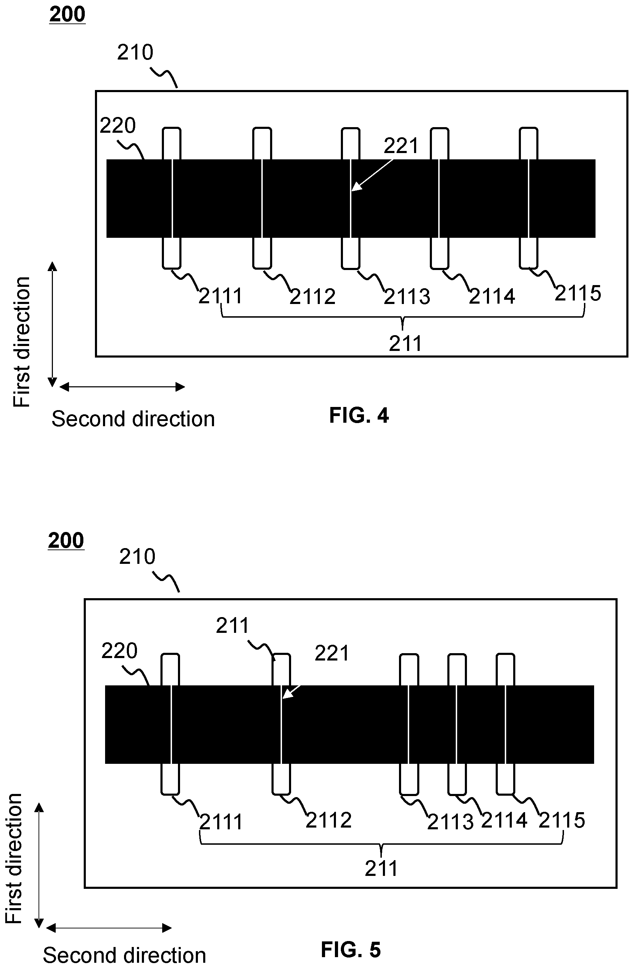

FIG. 4 is a diagram of an exemplary structure of a strain sensor according to some other embodiments of the present disclosure.

In some embodiments, the groove structure 211 includes a plurality of grooves, as shown in FIG. 4 or FIG. 5. Each groove may correspond to one or more cracks 221, i.e., the electrically conductive film 220 is provided with one or more cracks 221 corresponding to each groove. In some embodiments, in order to keep the cracks 221 corresponding to the plurality of grooves consistent (e.g., lengths of the cracks being the same), a dimension of the groove structure 211 in the first direction may be larger than a dimension of the electrically conductive film 220 in the first direction at the position of the groove structure 211. In this arrangement, the electrically conductive film 220 covers at least a portion of a region between two edges of the groove structure 211 in the first direction.

In some embodiments, a density of the cracks 221 in the electrically conductive film 220 affects the sensitivity of the strain sensor 200. The greater the density of the cracks 221 in the electrically conductive film 220, the higher the sensitivity of the strain sensor 200 to external stress may be at positions corresponding to the cracks. The lower the density of the cracks 221 in the electrically conductive film 220, the lower the sensitivity of the strain sensor 200 to external stress may be at the positions corresponding to the cracks. In some embodiments, the sensitivity of different locations of the strain sensor 200 in response to an external force may be the same. For example, the groove structure 211 may include a plurality of uniformly arranged grooves. In other words, the spacing between neighboring grooves is equal. For example, as shown in FIG. 4, the groove structure 211 includes a plurality of grooves 2111, 2112, 2113, 2114, and 2115 equally spaced along the second direction, the spacing between the adjacent grooves is equal. By evenly spacing the grooves, the strain sensor 200 can simultaneously sense external stress at one or more locations. For example, in the circuit incorporating the strain sensor 200, the plurality of cracks 221 corresponding to the plurality of grooves described above may be equivalent to a plurality of switches or a plurality of resistors in series. When one of the cracks 221 is in a fully open state due to external stress, the circuit incorporating the strain sensor 200 may be in an open-circuit state, which may be used to measure the presence or absence of external stress within a relatively large area, thereby improving an applicability range of the strain sensor. As another example, in the circuit incorporating the strain sensor 200, the crack 221 corresponding to each groove may be equivalent to a switch or a resistor, and by providing a lead (or a conduction wire) in the electrically conductive film 220 on two sides of each groove corresponding to the crack 221, parallel connections may be made between the grooves corresponding to the cracks 221. The cracks 221 at different positions may be in different states (which correspond to different resistance values) based on different external stresses applied, so that the strain sensor 200 can detect the magnitude of the external stresses at multiple positions simultaneously, thereby improving the applicability range of the strain sensor.

FIG. 5 is a diagram of an exemplary structure of a strain sensor according to some other embodiments of the present disclosure.

In some embodiments, the sensitivity of the response to external forces corresponding to different positions of the strain sensor 200 may vary. In some embodiments, the sensitivity of the response to external forces at different positions on the strain sensor 200 may be adjusted by adjusting the dimension of the groove structure 211 in the first direction and/or the second direction, a distance between adjacent groove structures 211, a count of groove structures 211, or the like. Exemplarily, as shown in FIG. 5, the groove structure 211 includes a plurality of grooves distributed along the second direction, and the dimensions of the grooves at different locations in the second direction may be different and/or the spacing between any two neighboring groove structures 211 may be different (i.e., a density of the distribution of groove structures at the different locations is different), so that the sensitivity of different positions on the strain sensor 200 in response to the external force is different. For example, the spacing between the groove 2111 and the groove 2112 is different from the spacing between the groove 2113 and the groove 2114.

In some embodiments, the denser the groove structures 211 are provided, the more sensitive they are to external stress. For example, more groove structures 211 may be set in a sensitive part of a target object and fewer groove structures 211 may be set in a non-sensitive part to adapt to different application scenarios and improve device utilization. For example, when the strain sensor 200 is applied to a wearable device such as an earphone, the strain sensor 200 (or the substrate 210) may be shaped in a form of a sheet and provided in an earphone rear-hanging assembly between two loudspeakers of the earphone. Since a curvature of a middle position of the headphone rear-hanging assembly is more pronounced compared to positions close to the two loudspeakers, it may be determined that the middle position of the headphone rear-hanging assembly or the vicinity thereof is a sensitive part, and the positions close to the two loudspeakers is a non-sensitive part. In this case, more groove structures 211 (or corresponding cracks 221) may be provided at or near the middle position of the headphone rear-hanging assembly to enhance the sensitivity and device utilization of the strain sensor 200.

In some embodiments, in order to make the response sensitivity of the strain sensor 200 to external stress different at different positions, conductive pastes with different resistivities may also be coated on different positions of the substrate 210. For example, a conductive carbon paste may be coated in one region of the strain sensor 200, and a conductive silver paste may be coated in the remaining region, so that different positions on the strain sensor 200 have different degrees of sensitivity, or different response modes, in response to external stress. The configuration of the sensitivity of the different positions on the strain sensor 200 may be varied based on specific application scenarios of the strain sensor, and is not limited in the present disclosure.

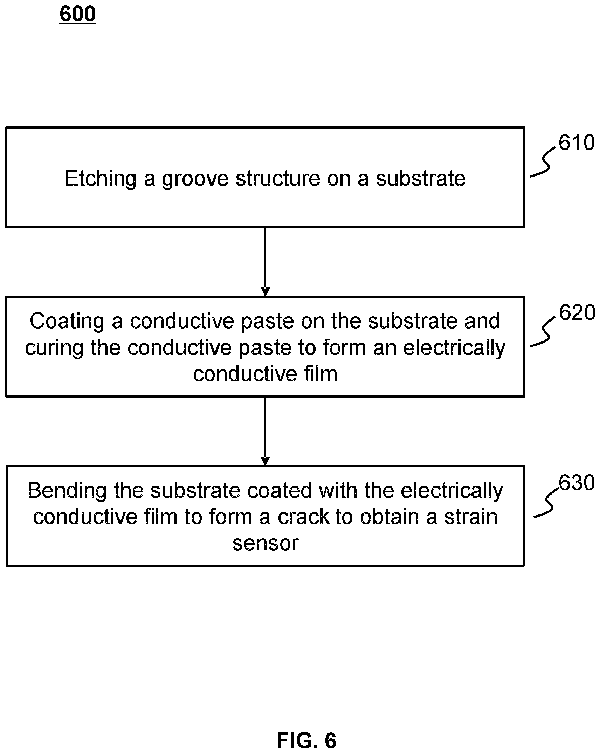

FIG. 6 is a flowchart of an exemplary process for preparing a strain sensor according to some embodiments of the present disclosure. As shown in FIG. 6, a process 600 for preparing a strain sensor may include the following operations.

In 610, a groove structure may be etched on a substrate. The substrate is non-conductive. In some embodiments, the substrate may be made of a non-conductive material that has a certain degree of mechanical strength and may generate an elastic deformation under external stress. For example, the substrate 110 may be made of a material such as polyvinyl alcohol, polyimide, polydimethylsiloxane, or the like. In some embodiments, the substrate may also be an electrically conductive material with an insulating layer wrapped around a surface thereof. The insulating layer may render the substrate non-conductive. Exemplary materials for the insulating layer may include polyethylene, rubber, or the like.

Exemplary etching techniques may include ion beam etching, laser etching, gas etching, etching solution etching, mechanical etching, or the like. In some embodiments, when the groove structure penetrates the substrate, the etching process may be a penetrating etching of the substrate (e.g., by mechanical etching) to form the groove structure. In some embodiments, if the groove structure does not penetrate the substrate, the etching process may involve nonpenetrating etching (e.g., gas etching) to form the groove structure. In some embodiments, in order to prevent the groove structure from further expanding due to the tip stress concentration during the subsequent formation of cracks in an electrically conductive film, which may affect the performance (e.g., mechanical strength) of the resulting strain sensor, an aperture-like structure may also be etched at each of two ends of the groove structure.

In some embodiments, the groove structure may extend in a first direction of a width of the substrate. To produce more uniform and consistent cracks in the electrically conductive film, a dimension of the groove structure in the first direction may be larger than a dimension of the electrically conductive film in the first direction at the position of the groove structure. In other words, the groove structure 211 is not completely covered by the electrically conductive film 220.

In 620, a conductive paste may be coated on the substrate and cured to form an electrically conductive film.

In some embodiments, the conductive paste may be made by mixing conductive particles with a resin substrate. Exemplary conductive particles may include carbon black, carbon nanotubes, graphene, silver powder, copper powder, or the like. Exemplary resin substrates may include epoxy resins, polyvinyl chloride (PVC), polyimide resins, phenolic resins, or the like. In some embodiments, different conductive pastes may enable different sensing effects of the strain sensor. For example, when the conductive paste is a conductive carbon paste, the opening and closing of the subsequent prepared crack may lead to a change in resistance of the electrically conductive film, and the strain sensor thus prepared may be a resistive strain sensor for sensing the magnitude of external stress. As another example, when the conductive paste is a conductive silver paste, the opening and closing of the crack may reflect an open-circuit state and a closed-circuit state of a circuit in which the strain sensor is located, and the strain sensor thus prepared may be a switching device. In some embodiments, a thickness of the conductive paste may be in a range of 1 µm to 100 µm. In some embodiments, the curing process may include sintering, low temperature curing, self-drying thermoplastic, or the like.

In 630, the substrate coated with the electrically conductive film may be bent to form a crack to obtain the strain sensor. In some embodiments, other operations may be performed on an obtained device after the crack is formed to obtain the strain sensor. For example, the obtained device may be soldered with an external lead to facilitate connecting the ultimately obtained strain sensor to an external circuit. As another example, the obtained device may be encapsulated to enhance the stability and mechanical reliability of the obtained strain sensor.

The method for preparing a strain sensor described in some embodiments of the present disclosure involves pre-setting (e.g., uniformly or non-uniformly) a groove structure on the substrate, allowing stress to be highly concentrated at the groove structure during the crack formation process. This promotes the preferential formation of a crack at the groove structure. By reasonably positioning the groove structure, the crack can be controllably generated in the electrically conductive film, thereby enhancing the consistency of the performance of the prepared strain sensor. The process is simple, facilitating industrial application. Additionally, the sensitivity of the prepared strain sensors can be flexibly adjusted by changing a width of grooves of the groove structure, a count of the grooves, and the conductivity of the conductive paste, thereby enhancing the adaptability of the strain sensor.

FIG. 7 is a diagram of an exemplary structure of a pressure sensor according to some embodiments of the present disclosure.

As shown in FIG. 7, a pressure sensor 700 includes a strain sensor and a support member 730.

The strain sensor may include a substrate 710 and an electrically conductive film 720. The substrate 710 is provided with a groove structure 711. The electrically conductive film 720 is adhered to a surface of the substrate 710, and the electrically conductive film 720 is provided with a crack 721 at a position corresponding to the groove structure 711. More descriptions of the strain sensor may be found elsewhere in the present disclosure, e.g., FIG. 2A- FIG. 5 and their descriptions, which will not be repeated here.

The support member 730 may be configured to support the groove structure 711 and the crack 721. For example, as shown in FIG. 7, the support member 730 causes the groove structure 711 and the crack 721 to be arranged in suspension. In some embodiments, supporters such as sponges, foams, etc., may be provided at suspension positions (i.e., a region between the support members 730 on the left and right sides in FIG. 7) corresponding to the groove structure 711 and the crack 721 to make the overall structure of the pressure sensor 700 more stable. It is to be understood that in the present disclosure, no limitations are placed on the supporters as long as it does not affect the deformation of the electrically conductive film 720 by external forces. In some embodiments, the substrate 710 may be disposed between the electrically conductive film 720 and the support member 730. An external force may be applied directly to the electrically conductive film 720. In some embodiments, the electrically conductive film 720 may be disposed between the support member 730 and the substrate 710, as shown in FIG. 7. The support member 730 may be disposed on at least a portion of the electrically conductive film 720. In some embodiments, the support member 730 may be provided directly on the substrate 710. For example, the support member 730 may be provided on a side of the substrate 710 where the electrically conductive film 720 is located. The external stress may act directly on the substrate 710.

In some embodiments, when the pressure sensor 700 is in a natural state, the crack 721 thereof may be in a closed state, at which time the two portions 722 and 724 of the electrically conductive film, formed by the division of the crack 721, are in best contact and a resistance of the electrically conductive film 220 may be at a minimum value. In this case, a circuit in which the pressure sensor 700 is located may be in a closed-circuit state. That is to say, the circuit in which the pressure sensor 700 is located may be in the closed-circuit state when the pressure sensor 700 is not subjected to external stress, and an electrical signal may be generated. When the pressure sensor 700 is subjected to external stress, the substrate 710 may deform in response to the external stress and drive the electrically conductive film 720 to deform, thereby separating the two portions 722 and 724 of the electrically conductive film (which may also be referred to as the crack 721 being in an open state). At this time, the circuit in which the pressure sensor 700 is located is in an open-circuit state. Therefore, it is possible to determine whether a user applies a pressure (e.g., whether the user taps or long-presses) based on a difference between electrical signals generated by the pressure sensor 700 in the circuit in the open-circuit state and the closed-circuit state, and thus a corresponding operation may be performed. For example, the pressure sensor 700 may be used as a touch or knock button for activating or closing an application. As another example, the pressure sensor 700 may be used as an electrical switch, thereby achieving a structure surface with no protrusions, or hiding the switch. Further, a touch gesture of the user may be determined based on a change in signal between two or more pressure sensors 700.

By way of example only, the pressure sensor 700 may be used as a touch component (e.g., a touch screen) in an earphone (e.g., a TWS earphone). Specifically, the earphone may include a loudspeaker, the pressure sensor 700, and a housing. The loudspeaker may be configured to generate a sound signal. The housing may be configured to carry the loudspeaker and the pressure sensor 700. The pressure sensor 700 may be switched from a conductive state to a disconnected state in response to a pressure applied by the user, thereby causing a change in an electrical signal of the circuit in which the pressure sensor 700 is located. A processor (not shown) may determine whether the user is applying pressure based on a rule of the change in the electrical signal.

The housing may include a contact surface. The contact surface is in contact with the face of the user when the user is wearing the earphone, and at least a portion of the pressure sensor 700 is provided on the contact surface. When the user wears the earphone, the pressure on the contact surface may cause the pressure sensor 700 to switch from the conductive state to the disconnected state and generate a corresponding electrical signal. The processor (not shown) may determine that the user has completed wearing based on the electrical signal. Further, the processor may control one or more electronic components (e.g., a Bluetooth module, a battery, etc.) of the earphone to enter an operational state. For example, the processor may control the earphone to turn on and play music. When the earphone is unworn, the pressure on the contact surface disappears, the pressure sensor 700 is in the conductive state, and the processor may determine that the user is unworn in response to determining that the pressure sensor 700 is in the conductive state. Further, the processor may control one or more electronic components (e.g., the Bluetooth module, the battery, etc.) of the earphone to enter a standby state.

In some embodiments, the electrically conductive film 720 may be formed by curing a conductive paste with a relatively high resistivity, and the resistance value of the electrically conductive film 720 may change in response to a deformation of the pressure sensor 700. Different external stresses may cause the electrically conductive film 720 to deform to different degrees (e.g., cause the crack 721 to open to different degrees), which may cause the electrically conductive film 720 to have different resistance values, which in turn may generate different electrical signals. As a result, an effect of the pressure sensor 700 sensing the magnitude of external stress may be realized. For example, the pressure sensor 700 (or the processor) may determine the magnitude of the external stress based on the electrical signal output from the pressure sensor 700 through a preset table of electrical signal-pressure value relationships. In some embodiments, the table of electrical signal-pressure value relationships may be experimentally determined.

The pressure sensor 700 described in some embodiments of the present specification may be used for detecting a wearing state or a non-wearing state of an earphone by setting the pressure sensor 700 on one or more contact surfaces between the earphone and a human body.

Beneficial effects that may be brought about by the embodiments of the present disclosure include, but are not limited to the following. (1) When using a conductive carbon paste as the material of the electrically conductive film, the sensitivity of the resistive strain sensor can be improved by creating a crack structure on the electrically conductive film, thereby making the strain sensor have a simple structure and a low production cost. (2) When using a conductive silver paste as the material of the electrically conductive film, a crack structure on the electrically conductive film can be utilized to achieve a stress switch. (3) By pre-designing a groove structure on the substrate, the formation of the crack in the electrically conductive film can be controlled in an orderly manner, thereby enhancing the consistency of the performance of the prepared strain sensor, which is beneficial for industrial applications. (4) The use of the aperture-like structure avoids stress concentration in the groove structure of the substrate, thereby ensuring the mechanical strength of the substrate. (5) By varying the width and the count of groove structures, as well as the conductivity of the electrically conductive film, the sensitivity of the strain sensor can be flexibly adjusted to suit scenarios with different sensitivity requirements. (6) By incorporating the support member to allow the groove structure and the crack to be suspended, pressure sensing can be achieved. It should be noted that different embodiments may produce different beneficial effects, and in different embodiments, the potential beneficial effects may be any one or a combination of the above, or any other possibly obtained beneficial effects.

The basic concepts have been described above, and it is apparent to those skilled in the art that the foregoing detailed disclosure is intended as an example only and does not constitute a limitation of the present disclosure. Although not explicitly stated here, those skilled in the art may make various modifications, improvements, and amendments to the present disclosure. These modifications, improvements, and amendments are intended to be suggested by the present disclosure, and are within the spirit and scope of the exemplary embodiments of the present disclosure.

## Claims

1. A strain sensor, comprising:
a substrate being provided with a groove structure; and
an electrically conductive film affixed to a surface of the substrate, a crack being provided at a position of the electrically conductive film corresponding to the groove structure.

2. The strain sensor of claim 1, wherein the groove structure penetrates the substrate.

3. The strain sensor of claim 1, wherein the groove structure does not penetrate the substrate, and the electrically conductive film is disposed on a side of the substrate where an opening of the groove structure is located.

4. The strain sensor of claim 3, wherein a dimension of the groove structure in a second direction along a length of the substrate is in a range of 1 µm to 50 µm.

5. The strain sensor of claim 1, wherein the groove structure does not penetrate the substrate, and the electrically conductive film is disposed on a side of the substrate opposite to a side where an opening of the groove structure is located.

6. The strain sensor of claim 5, wherein a dimension of the groove structure in a second direction along a length of the substrate is in a range of 10 µm to 100 µm.

7. The strain sensor of claim 1, wherein the groove structure extends in a first direction along a width of the substrate, and a dimension of the groove structure in the first direction is greater than a dimension of the electrically conductive film in the first direction at a position of the groove structure.

8. The strain sensor of claim 1, wherein the groove structure extends in a first direction along a width of the substrate, and a ratio of a dimension of the groove structure in the first direction to a dimension of the substrate in the first direction is in a range of 2/3 to 9/10.

9. The strain sensor of claim 1, wherein the groove structure extends in a first direction along a width of the substrate, and an aperture-like structure is provided at each of two ends of the groove structure along an extension direction of the groove structure.

10. The strain sensor of claim 1, wherein the groove structure includes a first groove, a second groove, and a third groove that are arranged sequentially in a second direction along a length of the substrate, and a first spacing between the first groove and the second groove is equal to a second spacing between the second groove and the third groove.

11. The strain sensor of claim 1, wherein the groove structure includes a first groove, a second groove, and a third groove that are arranged sequentially in a second direction along a length of the substrate, and a first spacing between the first groove and the second groove is not equal to a second spacing between the second groove and the third groove.

12. The strain sensor of claim 1, wherein a resistivity of the substrate is greater than 1 x 10⁷ Ω·m, and the electrically conductive film exhibits different resistances in response to changes in external stress.

13. The strain sensor of claim 12, wherein the electrically conductive film is made of a conductive carbon paste.

14. The strain sensor of claim 1, wherein a resistivity of the substrate is greater than 1 x 10⁷ Ω·m, and the electrically conductive film exhibits a conductive state or a disconnected state under an action of an external stress.

15. The strain sensor of claim 14, wherein the electrically conductive film is made of a conductive silver paste.

16. A method for preparing a strain sensor, comprising:
etching a groove structure on a substrate, the substrate being non-conductive;
coating a conductive paste on the substrate and curing the conductive paste on the substrate to form an electrically conductive film; and
obtaining the strain sensor by bending the substrate coated with the electrically conductive film to form a crack.

17. A pressure sensor comprising:
a strain sensor including:
a substrate, the substrate being provided with a groove structure; and
an electrically conductive film affixed to the surface of the substrate, a crack being provided at a position of the electrically conductive film corresponding to the groove structure; and
a support member for supporting the groove structure and the crack.

18. The pressure sensor of claim 17, wherein the support member is provided on the electrically conductive film or a side of the substrate where the electrically conductive film is located.

19. The pressure sensor of claim 17, wherein the pressure sensor is arranged in an earphone, the earphone comprising:
a loudspeaker configured to generate a sound signal, and
a housing configured to carry the loudspeaker and the pressure sensor, wherein
the pressure sensor is configured to switch the pressure sensor from a conductive state to a disconnected state in response to a pressure applied by a user and generate a corresponding electrical signal.
